# EUROPEAN PATENT APPLICATION

(11) **EP 2 000 436 A2**
(43) Date of publication of application: **10.12.2008**
(21) Application number: 06847048.3
(22) Date of filing: 16.11.2006
(51) Int. Cl.: C01D 3/14, C01D 3/22, C02F 1/52, A23L 1/22

(54) **METHOD AND SYSTEM FOR OBTAINING LIQUID SALT AND SALTS THUS OBTAINED**

(30) Priority: 09.02.2006 ES 200600291
(71) Applicant: Trisal S.A., 08223 Terrassa (Barcelona) (ES)
(72) Inventor: DOTTI SARDA, Jaume, E-08223 Terrassa (ES); DOTTI SARDA, Josep, Lluis, E-08223 Terrassa (ES)
(74) Representative: Gislon, Gabriele
(86) International application number: PCT/ES2006/000633
(87) International publication number: WO 2007/090907

(57) **Abstract**

The method comprises using the system for:
I) supplying water to a mixer-saturator group,
II) adding a ground salt in said mixer-saturator group,
III) stirring the mixture of water and salt until obtaining a solution with a maximum concentration,
a) leading the solution obtained in said step III) to first reactors-mixers, and there modifying its pH,
b) leading said solution of modified pH to a flocculation reactor, and there treating it with flocculating agents to eliminate the undesirable particles in suspension,
c) leading the solution obtained after step b) to reactors-decanters, adapted so that the undesirable particles are deposited at the bottom,
d) leading the supernatant solution in said reactors-decanters to a neutralizing tank, and there neutralizing the solution, thus obtaining a saturated solution of sodium chloride forming said liquid salt.

## Description

### Filed of the Art

The present invention relates to a method and a system for obtaining a liquid salt, and to the salts obtained by means of applying the method, including solid salts obtained from said liquid salts. The salts are useful for different uses, both for human consumption, in particular the seasoning of food, and for industrial uses.

### State of the Art

Different propositions aimed at obtaining liquid salt compositions, especially useful for human consumption, are known.

Patent ES-A-509961, part of the public domain, relates to a process for obtaining a common dietary salt, especially intended for human consumption. The salt therein proposed is formed by a mixture of potassium chloride, sodium chloride, potassium sulfate, glutamate, nucleotides and a sweetener. The mixture is subjected to different processes (grinding, compaction, moistening, etc.), after which, for one embodiment, the resulting salt is dissolved in water, for its use as liquid salt.

Patent application US-A-20050123670 relates to a stable, sodium-free or low-sodium aqueous seasoning solution of agreeable saltiness taste, for substituting common salt in the seasoning of foods. The solution comprises purified water, potassium salt, organic acid, magnesium salt and calcium salt. For one embodiment the solution also comprises sodium chloride. The salt is proposed to be used by means of a bottle with a sprayer or a dropper, depending on the dispensing method for the desired liquid salt.

In addition, utility model ES-A-1012193 proposes a double container-distributor of liquid seasonings for containing two different liquids, such as oil and vinegar, with salt dissolved, in two separate compartments with a common outlet for the purpose of mixing both liquids prior to its depositing, for example by spraying, on the food to be seasoned.

Patent US5814359 proposes a salt solution for producing soy sauce and a process for producing soy sauce. To obtain the salt solution, the process starts from a crude salt solution and it is mixed with a carbonate for precipitating, as sediments of said carbonate, the very hard components (basically calcium) when reacting with the carbonate, after which the supernatant solution is neutralized.

In the proposition provided in US5814359, and for the purpose of precipitating the sediments of the solution, the latter is left to settle in a tank for a time between 3 and 20 hours, due to the fact that it is the time needed for obtaining the supernatant clean water.

Said settling time makes the continuous production of the salt solution proposed in US5814359 impossible, as well as involving the need for arranging tanks used only for said function during said settling time, as well as arranging a temporary storage space that is large enough to locate said tanks, which, if high production is desired, can be considerably large.

### Description of the Invention

It is necessary to provide an alternative to the state of the art that makes it possible to produce a liquid salt which dispenses with the mentioned settling step used for precipitating sediments in US5814359, making it possible to manufacture, even continuously, a liquid salt.

To that end the present invention relates to a method and a system for obtaining a liquid salt or saturated solution, which allows obtaining a wide variety or range of liquid salts of different degrees of purity and content, as well as for different uses, substantially maintaining the degree of saturation obtained as a result of the elements included in the system.

In a first aspect, the present invention relates to a method for obtaining a liquid salt, which generally consists of mixing a solid salt with water until its maximum degree of saturation, obtaining a saturated solution of sodium chloride, and subsequently subjecting said saturated solution of sodium chloride to a series of processes to improve its characteristics and to eliminate impurities.

Unlike conventional proposals, reflected especially in US5814359, the mentioned processes are carried out according to at least the following steps included in a purification process:
a) modifying the pH of said saturated solution of sodium chloride, or stock solution, until reaching values considered suitable so that flocculating agents can interact with colloidal particles and impurities in suspension typical of the origin of said solid salt, and
b) treating with said flocculating agents said stock solution the pH of which has been modified in said step a), to eliminate said particles and impurities in suspension.
   Depending on the embodiment, the proposed method comprises subjecting said saturated solution, in addition to subjecting it to said processes, to a series of sub-processes and processes also focused on improving its characteristics and thus, obtaining said series of different ranges of salt solutions with peculiar properties and uses.
   For one embodiment of the proposed method said steps a) and b) are sequentially carried out in the same tank, the saturated solution of sodium chloride being incorporated to said tank or said mixture of said solid salt with water being carried out in the same tank where steps a) and b) are carried out, generally by means of a corresponding stirring.
   For said embodiment the method comprises carrying out during said step b) (and generally also during said step a)) stirring of the solution contained in said tank to improve the action of said flocculating agents (which will be described with more detail below).
   Following with the same embodiment regarding the use of a single tank, and after a certain time considered sufficient for the flocculating agents to have acted, the method comprises stopping said stirring of said step b) so that the agglomerates of undesirable particles fall by gravity and are deposited at the bottom of said tank, after which said undesirable particles are eliminated to prevent their accumulation, after which the method comprises adding pH stabilizing agents in said tank (or in another tank if the free solution of undesirable particles is led to another tank) until reaching parameters close or equal to neutrality, thus obtaining a saturated solution of sodium chloride forming said liquid salt.
   For another embodiment, unlike the last embodiment described, several tanks are used for carrying out the different steps of the method, comprising:
   said step a) leading the stock solution to first reactors-mixers and carrying out said pH modification in said first reactors-mixers, and
   said step b) leading said stock solution the pH of which has been modified in said step a) to a flocculation reactor and carrying out said treatment with said flocculating agents in said flocculation reactor.

   Following with said embodiment for which several tanks are used, the proposed method comprises performing, after said step b), the following steps:
c) leading the solution obtained after step b), once treated with said flocculating agents, to adapted reactors-decanters so that the agglomerates of undesirable particles fall by gravity and are deposited at the bottom of said reactors-decanters, after which said undesirable particles are eliminated to prevent their accumulation, and
d) leading the supernatant solution in said reactors-decanters used in said step c) to a neutralizing tank, and adding pH stabilizing agents in said neutralizing tank until reaching parameters close or equal to neutrality, thus obtaining a saturated solution of sodium chloride forming said liquid salt.

In relation to the mentioned flocculating agents, the latter are of a type suitable for fast acting, the use of which allows precipitating the sediments of the solution without the need for the settling step necessary in conventional methods and systems.

Depending on the embodiment the flocculating agents used by the method of the first aspect of the invention can be a natural type additive, such as clay, or an artificial type additive, such as a synthetic polymer, or a combination thereof.

For one embodiment, the method comprises carrying out during said step b) stirring of the solution contained in said flocculation reactor for the purpose of improving the action of the flocculating agents.

For another embodiment in which the solution is led to the flocculation reactor (step b)) by means of a system which causes a turbulent flow of the same when entering in the flocculation reactor, it is not necessary to perform stirring additional to that inherent to said turbulent flow if the latter is sufficient so that the flocculating agents act properly.

In relation to the mentioned pH modification of step a), it comprises carrying out at least an alkalization process comprising, for one embodiment, adding in said step a) at least a sodium hydroxide type alkali and/or a calcium hydroxide type alkali to said stock solution, and if necessary stirring the mixture for better dissolution.

For another embodiment said pH modification of said step a) further comprises carrying out a decarbonation process, adding a sodium carbonate for example.

Said addition of said alkali is also performed, according to one embodiment, to allow the precipitation of the magnesium salts to a greater or lesser degree according to if the pH reached is higher or lower.

For one embodiment the method proposed by the first aspect of the invention comprises carrying out the mentioned mixture of a solid salt with water until its maximum degree of saturation by means of performing the following initial steps:
I) supplying water to a mixer-saturator group comprising at least one mixer-saturator,
II) automatically and continuously adding in said mixer-saturator group a salt with a purity equal to or greater than 80% in sodium chloride, physically previously ground until obtaining a grain size readily dissolved in water,
III) continuously stirring the content of said mixer-saturator to dissolve said ground salt in said water or to completely dissolve a premixture of the salt and the water, until obtaining a maximum concentration, measured by its density, and until its degree of saturation is between 1.205 and 1.208 g/ml.

In a second aspect, the present invention relates to a system for obtaining a liquid salt comprising: a milling section, a saturation section, a conditioning and purification section and a neutralization section for the purpose of being able to carry out, by means of its use, the steps of the proposed method by the first aspect of the present invention to obtain the mentioned liquid salt.

A third aspect of the present invention relates to a liquid salt obtained by means of applying the proposed method, the composition and use of which can be quite varied, including additives, colorants, preservatives, aromatic agents, etc., when its use is for human consumption, for seasoning foods, or even for industrial uses, in which case the requirements for the elements to be included in the composition are less restrictive, such as those regarding the purity of the water to be used.

Several of said compositions as well as a more detailed explanation including examples of its possible uses will be explained below.

According to the third aspect of the present invention, after applying an evaporation and crystallization process to a liquid salt, a solid salt proposed by a fourth aspect of the present invention is obtained.

### Brief Description of the Drawings

The previous and other advantages and features will be more fully understood from the following detailed description of several embodiments in reference to the attached drawings, which must be interpreted in an illustrative and non-limiting manner, in which:
Figure 1 is a schematic depiction of the different sections included in the system proposed by the second aspect of the present invention for one embodiment by means of the use of which it is possible to carry out the method proposed by the first aspect of the invention,
Figure 2 is an partially sectioned elevational view of the different elements forming the saturation section of the proposed system for one embodiment, and
Figure 3 is a schematic depiction of a system by means of the use of which it is possible to obtain the solid salt proposed by the fourth aspect of the present invention.

### Detailed Description of Embodiments

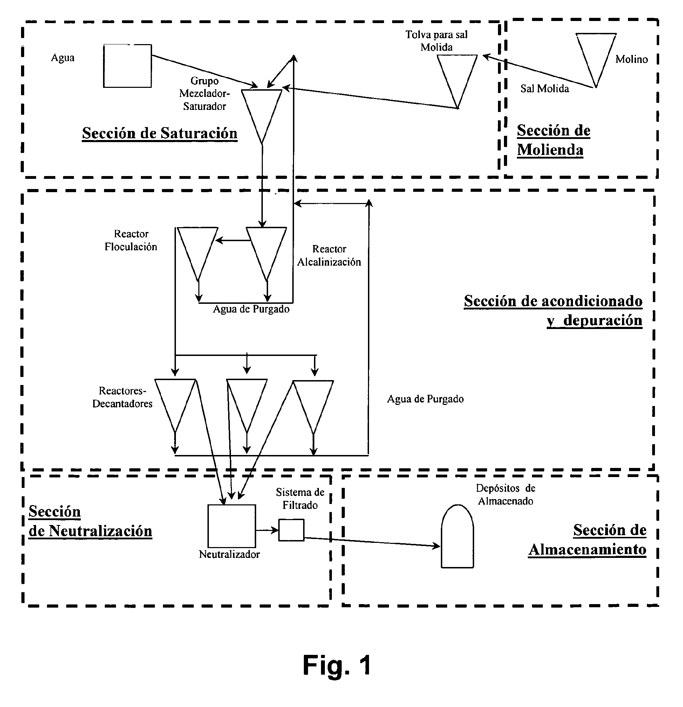

The system proposed by the second aspect of the present invention will first be described below, which system is schematically shown in Figure 1, in which the different parts of the system have been indicated as such, by means of words, and the direction of the water, the solid salt and the liquid salt are indicated by means of corresponding arrows.

As can be seen in said Figure 1, the system for obtaining a liquid salt proposed by the second aspect of the invention comprises:
- a milling section formed by a mill adapted for milling a salt until obtaining a grain size readily dissolved in water, with a granulometry between 0.5 and 5 mm.
- a saturation section, located after said milling section, and formed by a mixer-saturator group connected on one side to a water inlet (indicated in Figure 1 by a rectangular block) and on the other side to the outlet of a hopper receiving said ground salt, and adapted for mixing and dissolving said ground salt with said water, obtaining a saturated solution of sodium chloride, or stock solution,
- a conditioning and purification section connected to the outlet of said saturation section to eliminate the possible colloidal particles and impurities in suspension, typical of the origin of the salt, from said stock solution, and
- a neutralization section connected to the outlet of said conditioning and purification section to stabilize the pH of the solution that comes from the same until reaching parameters close or equal to neutrality, thus obtaining a saturated solution of sodium chloride forming said liquid salt.

For the embodiment depicted in said Figure 1, it can be observed how said conditioning and purification section is formed by an alkalization reactor for carrying out the mentioned conditioning and by a flocculation reactor for carrying out the mentioned purification acting on the conditioned water. There are arranged at the outlet of said flocculation reactor reactors-decanters which complement said purification, the product of which is sent to a neutralizer included in said neutralization section, at the outlet of which there is arranged a filtering system for filtering the neutralized water.

As can be seen in said Figure 1, the system further comprises:
- a storage section connected to the outlet of said neutralization section to store the saturated solution obtained in storage tanks adapted for preserving it from external contaminating agents, conserving its physical-chemical stability and maintaining the obtained degree of saturation substantially stable.

In said Figure 1 it is observed how the excess water, or purge water, of the alkalization and flocculation reactors and of the reactors-decanters is led again (in the direction indicated by the arrows) to the mixer-saturator group for the purpose of reusing it by dissolving it with the salt.

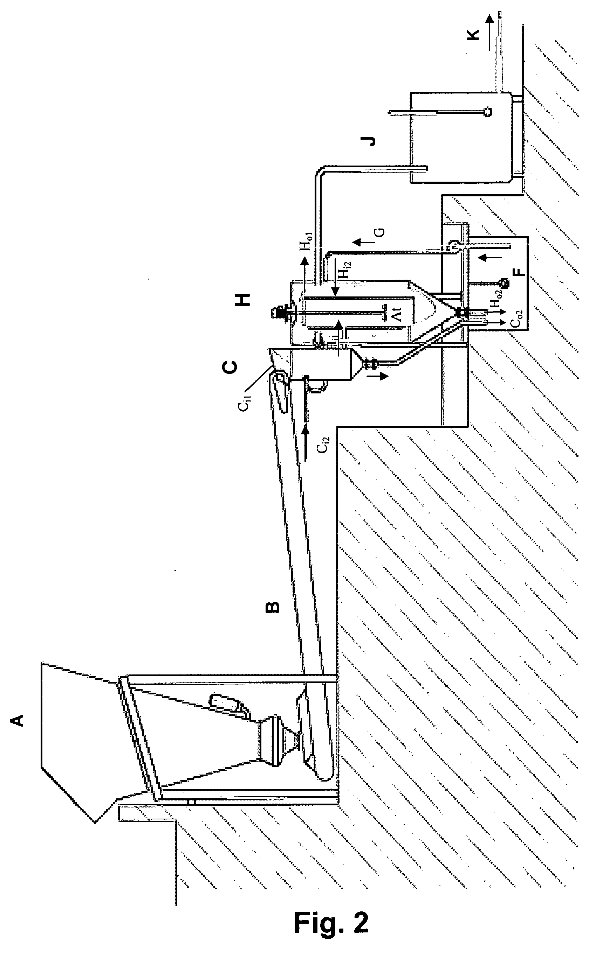

Figure 2 shows in detail the mentioned saturation section of the proposed system for a preferred embodiment for which said saturation section comprises:
- an automatic salt addition system formed by:

- a hopper where the salt previously ground in said milling section is deposited, and
- a conveyor belt or feeding belt B connected to the outlet of said hopper A to lead the salt to a premixture area,
   and
- a mixer-saturator group formed by:

- a premixture reactor C, located in said premixture area, with a first upper mouth or inlet Cᵢ₁ associated to an outlet end of said conveyor belt B to receive the salt led by the same, and a second inlet Cᵢ₂, generally formed by a small diameter pipe, adapted for receiving water under pressure for the purpose of producing a premixture of the salt and the water, and
- a mixer-saturator H with a first inlet connected to a transfer outlet Co₁ of said premixture reactor C to receive said premixture, said mixer-saturator H comprising a stirrer At for mechanically stirring said premixture for the purpose of completely dissolving and homogenizing the premixture and obtaining said saturated solution of sodium chloride, or stock solution, to be transferred to said conditioning and purification section.

Said saturation section comprises a storage tank J with an upper mouth or inlet communicated with a distribution outlet Hₒ₁ of said mixer-saturator H to receive said stock solution and store it at least temporarily, said storage tank J comprising an outlet and an automatic pumping system to transfer the stock solution to said conditioning and purification section, as indicated by the arrow K.

Preferably, and for the purpose of using the excess of salt or non-dissolved salt from both the premixture reactor C and the mixer-saturator H, said saturation section comprises a pit F located below said premixture reactor C and said mixer-saturator H, comprising respective discharge outlets Cₒ₂, Hₒ₂ to discharge the non-dissolved excess salt to said pit F, the mixer-saturator H further comprising a second inlet Hᵢ₂ communicated with said pit F through a recovery or return circuit G to introduce said excess salt in the mixer-saturator for the purpose of dissolving it by means of the mentioned mechanical stirring.

Said mixer-saturator H comprises or is associated to detection means adapted for measuring the density of the solution contained therein for the purpose of detecting a maximum concentration of the same until its degree of saturation is between 1.207 and 1.208 g/ml, the solution being constantly stirred until said maximum concentration is obtained.

The first aspect of the present invention relates to a method for obtaining a liquid salt, comprising, for the embodiment described herein, using the system proposed by the second aspect of the invention for the embodiment depicted in Figure 1, performing the following steps:
I) supplying water to a mixer-saturator group comprising the mentioned mixer-saturator H of the proposed system,
II) automatically and continuously adding in said mixer-saturator group a salt with a purity equal to or greater than 80% in sodium chloride, physically previously ground until obtaining a grain size readily dissolved in water, generally with a granulometry between 0.5 and 5 mm,
III) continuously stirring the content of said mixer-saturator H to dissolve said ground salt in said water or to completely dissolve a premixture of the salt and the water until obtaining a maximum concentration, measured by its density, and until its degree of saturation is between 1.205 and 1.208 g/ml,
   a) leading the saturated solution of sodium chloride, or stock solution, obtained in said step III) to first reactors-mixers, or alkalization reactors (see Figure 1), and modifying, in said first reactors-mixers, the pH of said stock solution until reaching values considered suitable so that flocculating agents can interact with colloidal particles and impurities in suspension typical of the origin of the salt added in said step II),
   b) leading said stock solution, the pH of which has been modified in said step a), to a flocculation reactor (see Figure 1), and treat it with said flocculating agents, in said flocculation reactor, to eliminate said particles and impurities in suspension,
   c) leading the solution obtained after step b), once treated with said flocculating agents, to reactors-decanters (see Figure 1) adapted so that the agglomerates of undesirable particles fall by gravity and are deposited at the bottom of said reactors-decanters, after which said undesirable particles are eliminated to prevent their accumulation,
   d) leading the supernatant solution in said reactors-decanters used in said step c) to a neutralizing tank (see Figure 1), and adding pH stabilizing agents in said neutralizing tank until reaching parameters close or equal to neutrality, thus obtaining a saturated solution of sodium chloride forming said liquid salt.
      As described in a previous section, for another embodiment the method comprises obtaining the saturated solution of sodium chloride by means of mixing solid salt and water in a different manner from that described in steps I) to III), the proposed method not being limited to any specific solid salt and water mixing process.
      For one embodiment based on the use of the saturation section depicted in Figure 2 and described above, the method comprises carrying out said step II) by means of the described automated addition system, and carrying out said step I) supplying water under pressure to said premixture reactor C comprised in said mixer-saturator system, generally by means of a pumping and piping system, and performing said step II) adding said salt in said premixture reactor C, a premixture of the salt and the water being produced in said premixture reactor C, which is sent to said mixer-saturator H connected to the outlet of said premixture reactor C, where said step III) is carried out by means of the mechanical stirring of said premixture.
      Still in reference to Figure 2, for one embodiment the method comprises sending to said mixer-saturator H salt coming from said pit F collecting the excess salt discharged at the lower part by both, the premixture reactor C and the mixer-saturator H, by means of a return or recovery circuit G which communicates said pit F with an inlet Hᵢ₂ of said mixer-saturator H, where said excess salt recovered is stirred according to said step III) until reaching its maximum concentration.
      After said step d) the method comprises performing the following step:
   e) leading said saturated solution obtained to storage tanks adapted for preserving it from external contaminating agents, conserving its physical-chemical stability and maintaining the obtained degree of saturation substantially stable.
      For one embodiment the method comprises directly packaging said solution stored in said step e) in containers adapted for maintaining the obtained degree of saturation substantially stable, said adaptation consisting of said storage tanks and/or of said containers comprises at least conferring configurations to the same which provide good tightness characteristics.
      In relation to the mentioned pH modification of said step a), this is carried out by means of at an least alkalization process in the alkalization reactor depicted in Figure 1, and additionally a decarbonation process (not shown), depending on the requirements for the obtained final liquid salt.
      For one embodiment, the mentioned pH values to be reached for said stock solution by means of said modification of said step a) are comprised between 10 and 11.5 units.
      For another, more demanding embodiment regarding the quality of the liquid salt to be obtained, specifically for the purpose of obtaining a low hardness liquid salt, as will be explained below by means of an example, said pH values obtained by means of the modification of step a), are greater than 12 units for the purpose of allowing the precipitation of the magnesium salts.
      For the embodiment depicted in Figure 2 said step a) is carried out by means of an automatic pumping system for leading the saturated solution of sodium chloride from the stock solution tank J, connected to the outlet of the mixer-saturator H, to said first reactors-mixers.
      The mentioned leading of said supernatant solution of said step d) is carried out by gravity to said neutralizing tank after an overflow of the supernatant solution in said reactors-decanters by spouts located therein.
      In relation to said leading of said step e), this is carried out by means of pumping system and a closed piping circuit, to prevent its possible contamination, to said storage tanks.
      The proposed method comprises performing the following step after said step e):
   f) leading, generally by means of a pumping system, said solution stored in said step e) to second reactors-mixers (not shown) for a subsequent treatment.

Said subsequent treatment of said step f) consists of mixing, by means of forced stirring, the saturated solution of sodium chloride with one or more additives individually or mixed with one another.

For the case in which a liquid salt suitable for human consumption is to be obtained, said mixed water and solid salt and said flocculating agents used in said step b) are suitable for human consumption, the water suitable for human consumption, or drinking water added, preferably being previously treated by any demineralization, decalcification and/or reverse osmosis process.

In said case in which the liquid salt is intended for human consumption, the water to be used will be one which meets the requirements established by applicable law for water for human consumption in all aspects, public water supply being usable.

For the cases in which a liquid salt not suitable for human consumption, to be used, for example, in industrial processes, is to be obtained, the water to be supplied in said step I) can be water coming from, for example, other sub-processes or water obtained from underground tributaries, such as wells, etc.

For one embodiment said additive or additives to be used in said step f) are one or more of the group formed by the following elements, all of them suitable for human consumption:
- food concentrates of meat, fish, vegetables, fruit, herb extracts, chili peppers or a combination thereof,
- flavorings and flavor enhancers,
- colorants,
- aromatic agents, sweeteners and sweetening agents
- stabilizers, emulsifiers, pH regulating elements,
- preservative agents and other biocidal elements and microbial contamination controllers,
- other spices, seasonings and additives, and
- minerals.

For one embodiment the method comprises performing said mixing of said step f) using the following proportions: 93 to 99% of saturated solution of sodium chloride, 0.1 to 5% of food concentrate, herb extracts and/or chili peppers, and, where appropriate, 0.01 to 2% of aromatic agents.

For one embodiment, the method comprises packaging said solution obtained after said step f) using metering containers in the form of sprayers for the purpose of homogeneously supplying its content on foods.

Different compositions of liquid salts for human consumption will be explained below by way of example.

In relation to the origin of the salt added in said step II), for one embodiment it is a natural mineral rock salt which has been extracted from the depths of salt mines and for another embodiment a sea salt obtained by direct evaporation.

The description provided up to this point has essentially focused on, the saturation section of the system proposed by the second aspect of the present invention, as well as the actions of the method associated to said saturation section, i.e., steps I) to III).

To that end, the steps associated to the conditioning and purification sections (steps a) to c)) as well as those relating to the neutralization section (step d)) of the proposed system will be described below in further detail.

Said description will be made for some embodiments, depending on the characteristics of the liquid salt to be obtained, also referred to below as the product, particularly its degree of hardness.

With regard to step a) of pH modification, or solution conditioning, or also referred to as conditioning sub-process, it can be explained as follows:

In this conditioning sub-process, or step a), the "stock solution" is pumped to the mentioned first reactors-mixers where its pH is modified to optimal values so that the colloidal particles and the remaining undesirable elements in suspension are destructured and can be eliminated. Different treatments can be carried out in this sub-process according to the product to be obtained:

To obtain a product with regulated hardness:
- Proceeding with an alkalization method the amount of calcium and magnesium salts as well as other alkaline earth elements, sulfates and other salts present in the "stock solution" and causing the hardness of said solution is reduced. This conditioning is performed in the following way:
   ■ A sodium hydroxide or calcium hydroxide type alkali is added at a ratio of 0.15 - 25 g/l of the solution to be treated, according to the used product, or until reaching a pH less than 11 units. These elements can be added in solid form by means of a metering system consisting of a worm screw system which proportionally adds the product or by means of a prior dissolution, in the case of the calcium hydroxide, in the form of lime milk and prepared with the actual "stock solution" to prevent the concentration of the "stock solution" from being varied if it is dissolved in running water, or in a liquid phase, as can be the case of the sodium hydroxide, with highly concentrated products and taking the precaution of adapting a suitable vessel for highly caustic products and taking as a preventive measure providing these storage tanks with a system which maintains the contained product in optimal temperature conditions and preventing its freezing and/or crystallization. In these cases in which the alkali is added in liquid state a conventional pumping system with an adjustable capacity is used. The alkali supply is controlled by means of an automated control of the pH measurement of the "stock solution" which is being treated. This auto-control system allows the exact and necessary metering and maintains the pH value within the established ranges. The pH of the product is adjusted to values between 10 and 10.5 pH units so that the product and its pH are those desired.

To obtain a product with low hardness:
- Proceeding with an alkalization method combined with a decarbonation method, the amount of calcium and magnesium salts as well as other alkaline earth elements, sulfates and other salts present in the "stock solution" and substantially causing the hardness of said solution is reduced, obtaining hardness less than 10° TH. This conditioning is performed in the following way:
   ■ Alkalization method: A sodium hydroxide alkali or calcium hydroxide type is added to an alkalization reactor (see Figure 1) at a ratio of 0.25 - 45 g/l of the solution to be treated, according to the used product, or until reaching a pH greater than 12 units, for the purpose of precipitating the elements causing the hardness, such as magnesium salts. These elements can be added in solid form by means of a metering system consisting of a worm screw system which proportionally adds the product or by means of a prior dissolution, in the case of the calcium hydroxide, in the form of lime milk and prepared with the actual "stock solution" to prevent the concentration of the "stock solution" from being varied if it is dissolved in running water, or in a liquid phase, as can be the case of the sodium hydroxide, with highly concentrated products and taking the precaution of adapting a suitable vessel for highly caustic products and taking as a preventive measure providing these storage tanks with a system maintaining the contained product in optimal temperature conditions and preventing its freezing and/or crystallization. In these cases in which the alkali is added in liquid state a conventional pumping system with an adjustable capacity is used. The alkali supply is controlled by means of an automated control of the pH measurement of the "stock solution" which is being treated. This auto-control system allows the exact and necessary metering and maintains the pH value within the established ranges. The pH of the product is adjusted to values between 11 and 11.5 pH units so that the product and its pH are those desired.
   ■ Decarbonation method: A highly pure sodium carbonate is added on the same alkalized "stock solution", either directly in powder form, by means of a worm screw type solid metering system, or in the form of lime milk and prepared with the actual "stock solution" to prevent that the concentration of the "stock solution" from being varied if it is dissolved in running water, in any of the cases, the product to be added is at a ratio of 10-300 g/l, depending on the degree of hardness present in the "stock solution" to be treated, obtaining hardness less than 10° TH.

With regard to the purification of steps b) and c), it is carried out independently of the previous conditionings, and in it the "stock solution" treated, subjected at least to an alkalization method, is sent to a flocculation reactor (see Figure 1) where, as indicated in step b), the flocculating agents (suitable for human consumption if the liquid salt to be obtained has such a purpose) are added, which agents can interact with the colloidal particles and impurities in suspension typical of the origin of the salt used for preparing the "stock solution", as can be silicates, earths and other particles considered as undesirable in the end product, and for the purpose of eliminating them.

According to step c), the "stock solution" thus treated passes by its own inertia to reactors-decanters (three for the embodiment of Figure 1) where the agglomerates of undesirable particles fall by gravity and are deposited at the bottom of the reactors-decanters. Thus clearly different two phases are formed therein:
- A semisolid phase formed by the agglomerated particles, giving rise to a sludge or slurry which can be object of reuse for other purposes, and which are mechanically and automatically eliminated to prevent their accumulation by means of a cutter system which, temporarily regulated and pneumatically actuated, cause the discharge of this semisolid phase preventing its accumulation.
- A clear liquid phase which passes to the following neutralization process.

The slurries obtained from this treatment and discharged as has been described are led to a reactor-thickener (not shown), where they are accumulated and concentrated to reuse the aqueous phase which they release in the actual productive cycle and where by means of a cutter system which, temporarily regulated and pneumatically actuated, cause the discharge of the concentrate to a feed tank for feeding to a dehydration system. These deposited slurries are led by means of a high pressure pumping system to dehydration equipment which can consist of a press or centrifugation system for the purpose of proceeding to the elimination of the maximum possible content of water and salt solution, leaving these slurries with moisture contents of 2-10%. The extracted liquid part is reused in the productive process.

Similarly, a washing is carried out *in situ* by means of "freshwater" for the purpose of "washing" the sludge thus obtained and using and reducing as its salt content as much as possible, this extracted liquid part being reused in the production process and the initial slurries being reduced to values of 2-3% of the sodium chloride content.

With reference now to the neutralization of step d), it is carried out when the supernatant "stock solution" from the purification process overflows through spouts (not shown) located in the reactors-decanters and, by means of a suitable piping, to a pipe system, which leads it by gravity to a neutralization tank where the pH stabilizing agents are added to parameters close to neutrality.

The "stock solution" is converted at this point in a saturated solution of sodium chloride in suitable conditions both for human consumption (if water, salt and flocculating agents suitable for human consumption have been used) and for other purposes, according to the case, free from impurities and undesirable elements and duly conditioned for such purpose.

As has been explained above, the solution or "brine" thus obtained is led by means of pumping and a closed piping circuit, to prevent its possible contamination, to storage tanks where it is preserved from external contaminating agents as well as its physical-chemical stability being conserved and being ready for its subsequent use for its packaging, mixing or its distribution.

For the embodiment of the proposed method which involves the use of several tanks for carrying out the different steps of the method, as that depicted in Figure 1, part of or, preferably, all the steps can be carried out continuously, thus making it possible to obtain a high production of liquid salt without the need for stops or rest periods since, for example, when step b) is carried out for a solution contained in the flocculation reactor, step a) is carried out simultaneously for another solution contained in the alkalization reactor (or first reactors-mixers), which will progressively substitute that of the flocculation reactor which will also progressively fall by inertia to the reactors-decanters, and so on for the remaining steps.

A third aspect of the present invention relates to a liquid salt obtained by means of applying the method proposed by the first aspect of the present invention, such that it is assured that the composition of the same is maintained constant.

The obtained liquid salt is formed by a sodium chloride concentration between 305 to 330 g/l, in relation to dry weight, it has a density of 1.198 and 1.205 g/ml, preferably between 1.160 and 1.206 g/ml, and a neutral or slightly acid pH with values comprised between 5.50 and 7.50 units, and the following physical-chemical characteristics:
- turbidity of 0 to 5 NTU,
- hardness less than 400° TH,
- contents in trace elements, such as calcium, magnesium and sulfates, among others, or a combination thereof, and
- one or more trace elements, such as zinc and iron, among others, or a combination thereof.

As has been explained above, when describing the method proposed by the first aspect, for one embodiment a series of elements are added in said step f), which for the case of obtaining a liquid salt suitable for human consumption, are all of them suitable for human consumption:

Said elements are automatically added, in reactors-mixers, in proportions forming each final composition to be obtained, according to an actual and typical formulation of each type. Each of the ingredients, added to the stock solution, i.e., to the saturated solution of sodium chloride, hereinafter also referred as "Oligosal" when applied to human consumption, is mixed with the latter by means of forced stirring.

The liquid salt proposed is adapted for being packaged in a metering container in the form of sprayer to be applied regularly and homogeneously on the food to be flavored.

Its composition and/or said homogeneous distribution by means of said metering container allows substituting the effects, at least regarding flavor, that a higher amount of sodium provides in a solid salt.

Regarding the liquid salt for human consumption, possible and multiple combinations of the stock solution with other ingredients which give the peculiarity to each composition and which give rise to the different and varied ranges of "Oligosal" which can be prepared are set forth below. The following can be obtained, among many others:

| | | |
|---|---|---|
| o Oligosal - "Meat": | | |
| | ■ Oligosal | 93.0-99.0% |
| | ■ Meat Concentrate | 0.1-5.0% |
| | ■ Aromatic agents | 0.01-2.0% |
| o Oligosal - "Vinaigrette": | | |
| | ■ Oligosal | 70.0-99.8% |
| | ■ Olive oil | 0.1-15.0% |
| | ■ Grape Vinegar | 0.1-15.0% |
| o Oligosal - "Vegetables": | | |
| | ■ Oligosal | 93.0-99.0% |
| | ■ Vegetable Concentrate | 0.1-5.0% |
| | ■ Aromatic agents | 0.01-2.0% |
| o Oligosal - "Fish": | | |
| | ■ Oligosal | 93.0-99.0% |
| | ■ Fish Concentrate | 0.1-5.0% |
| | ■ Aromatic agents | 0.01-2.0% |
| o Oligosal - "Fine herbs": | | |
| | ■ Oligosal | 93.0-99.0% |
| | ■ Herb extracts | 0.1-5.0% |
| | ■ Aromatic agents | 0.01-2.0% |
| o Oligosal - "Spice": | | |
| | ■ Oligosal | 93.0-99.0% |
| | ■ Chili peppers | 0.1-5.0% |

These compositions can be complemented or not with any type of colorant, as well as any additive and/or ingredient, such as stabilizers, pH regulators, among others that condition the mixtures obtained.

An objective of the liquid salt for human consumption "Oligosal" and its derivatives (Oligosal plus additives) is the possibility of providing a saturated solution of sodium chloride prepared with salt and water suitable for human consumption, preferably in a metering container in the form of sprayer which assures, in preparing cooked dishes and other prepared food (salads,...), the exact and necessary salt allowance while at the same time it regulates the low sodium allowance and allows the consumer to have a healthy and balanced diet.

By means of this dispensing system an exact and uniform metering of the salt is provided, while at the same time a way of regulating the same is established by means of this system, assuring a low sodium allowance without losing the pleasing taste of the dishes and prepared food prepared by means of this system, compared to the traditional metering of this commonly used seasoning.

By means of the mentioned addition of the different constituents of the formulas and mixtures, the characteristics of the initial liquid salt are obtained and improved, providing and improving the organoleptic characteristics of the same depending on the additives added in each mixture (concentrates of meat, fish and/or vegetables, flavorings, colorants, aromatic agents, herbs and other seasonings) which provide the food to which they are added with better properties and in summary a better taste and aroma, as in its presentation the mixture assures the homogeneous and regular dispersion over all the food to which it is added, providing the exact and desired "touch" for each food or food preparation to which the mixture is added.

The fact that the ingredients are added in a sole metering assures that the taste finally obtained is maintained on the entire preparation, thus preventing the excess and or defects of the same and giving a completely homogeneous taste and color.

The system of application by means of spraying the product on the food and/or preparation on which it is applied assures that said addition is regular and homogeneous and in suitable doses according to the requirements of the consumer. This system further assures the necessary amounts in smaller doses and adjusting the doses until achieving the desired point.

This application form assures the reduction of up to 20% of the content in sodium chloride than with the traditional methods without therefore varying the compositions of the salt properly applied with other elements such as potassium chloride or other elements, except additives and ingredients added for a determined application and which characterize each combination for a determined use.

The studies performed in different and varied comparative organoleptic tests between the "Oligosal" and the common salt applied on different food reflect these conclusions.

Said results are assured by the homogeneous distribution over all the food where it is applied preventing the excess and/or deficiencies in the dishes prepared by means of the "Oligosal"

By means of a metering system by dripping or with a monodose, of a vial type, other functional systems are provided for performing a completely controlled and ensured salt allowance and facilitating its use in a rational manner. By means of these systems the application is carried out with the suitable dose by the degree of saltiness to be reached, according to the dish to be prepared, with two, three or ten drops, by the dripping system, or with a vial of 5, 10 or 20 ml, with the monodose system.

Likewise, it can be used in the preparation of food elements on a large scale, such as the preparation of bread dough, as a result of the fact that it maintains a freezing point of -14 to -11°C which facilitates a correct application and substantially improves the characteristics of the dough obtained with its application.

Similarly, the liquid salt proposed by the third aspect of the present invention can be used, without the need for being packaged, in the thawing processes of the food products assuring that the latter do not lose any of their properties while at the same time the times necessary for this process are very significantly reduced, submersing the product to be thawed in the solution.

When in the productive system salt and water suitable for human consumption have not been used, the product obtained, the "brine" cannot be used for such purposes although it can be used for other industrial purposes. However, in the reverse case, the same product obtained with food purposes can be used with industrial purposes.

Thus, the "brine" obtained as has been previously described and properly stored, can be used with different industrial purposes depending on the composition and characteristics obtained as has been described, which offers the possibility of obtaining a product with suitable conditions for a large variety of uses or more specific uses according to the case.

This final composition of the "brine" obtained gives rise to a series of product types differing from one another by their typical compositions and physical-chemical characteristics:
- "Hard" liquid salt type:

- The "brine", called "ionic" brine, of the "hard" liquid salt type used mainly in decalcification processes as a resin regenerating agent and which, as main characteristics, consists of:
   - a high sodium chloride concentration between 305-330 g/l, in relation to dry weight.
   - a density of 1.198 and 1.205 g/ml, and preferably between 1.160 and 1.205 g/ml.
   - a neutral or slightly acid pH with values comprised between 5.50 and 8.50 units.
   - a turbidity of 0 - 25 NTU.
   - a hardness less than 400° TH.
- "Soft" liquid salt type:

- The "brine", called "hydrolyzed" brine, of the "soft" liquid salt type used mainly in dyeing processes as an additive and in decalcification processes as a resin regenerating agents and which, as main characteristics, consists of:
   - a high sodium chloride concentration between 305-330 g/l, in relation to dry weight.
   - a density of 1.198 and 1.205 g/ml, and preferably between 1.160 and 1.205 g/ml.
   - a neutral or slightly acid pH with values comprised between 5.50 and 7.50 units.
   - a turbidity of 0 - 10 NTU.
   - a hardness less than 10° TH.

The different ranges and versions of these described types of "brine" can be used in any of the mentioned processes, their difference lying in their quality and purity, as well as the requirements for the actual productive process where are going to be used.

Similarly, due to their characteristics, they can be used in processes where low freezing points are required, such as bottle corking.

By means of adding other elements such as preservatives, stabilizers, acidifiers, sequestering agents or ionic and/or cationic complexing agents and other additives, the typical ranges of each type are obtained by means of adding one of the previous elements to the initial product, improving at the same time the initial characteristics and adapting it to applications where more adjusted conditions are required in some of the required aspects for the actual productive process in which it is applied. The following can thus can be obtained:
- The "brine", called "ionic salt UP" brine, within the range of the "hard" liquid salt type and it is derived from adding a decontaminating agent or a biocide to an "ionic" liquid salt and which is used mainly in processes in which the possible sources of microbial contamination must be very controlled and eradicated as much as possible and which, as main characteristics, consists of:
   - a high sodium chloride concentration between 305-330 g/l, in relation to dry weight.
   - a density of 1.198 and 1.205 g/ml, and preferably between 1.160 and 1.205 g/ml.
   - a neutral or slightly acid pH with values comprised between 5.50 and 7.50 units.
   - a turbidity of 0 - 10 NTU.
   - a hardness less than 400° TH.
   - a microbial content less than 100 cfu (expressed as total aerobic microorganisms).
- The "brine", called "pure salt" brine, within the range of the "soft" liquid salt type and it is derived from adding a complexing ingredient for calcium and magnesium cations to a "hydrolyzed" liquid salt, mainly, and thus masking the hardness effect and which is used mainly in dyeing processes as an additive and where a high yield of the effect of the colorants added is desired and which, as main characteristics, consists of:
   - a high sodium chloride concentration between 305-330 g/l, in relation to dry weight.
   - a density of 1.198 and 1.205 g/ml, and preferably between 1.160 and 1.205 g/ml.
   - a neutral or slightly acid pH with values comprised between 5.50 and 7.50 units.
   - a turbidity of 0 - 10 NTU.
   - a hardness of 0° TH.
- The "brine", called "ultra-pure salt" brine, within the range of the "soft" liquid salt type and it is derived from adding to a "hydrolyzed" liquid salt, in addition to a complexing ingredient for calcium and magnesium cations, mainly, and thus masking the hardness effect, another agent, in this case a decontaminating agent or a biocide to be used in processes in which the possible sources of microbial contamination must be very controlled and eradicated as much as possible and which, as main characteristics, consists of:
   - a high sodium chloride concentration between 305-330 g/l, in relation to dry weight.
   - a density of 1.198 and 1.205 g/ml, and preferably between 1.160 and 1.205 g/ml.
   - a neutral or slightly acid pH with values comprised between 5.50 and 7.50 units.
   - a turbidity of 0 - 10 NTU.
   - a hardness of 0° TH.
   - a microbial content less than 100 cfu (expressed as total aerobic microorganisms).

A fourth aspect of the present invention relates to a solid salt obtained from applying an evaporation and crystallization process to a mixture of a liquid salt and agglomerating elements.

For one embodiment said solid salt is obtained from applying said evaporation and crystallization process to a mixture of said agglomerating elements and a liquid salt according to the third aspect of the invention, by means of which the proposed solid salt is obtained in highly purified crystals.

Said agglomerating elements are of the magnesium salt type, such as magnesium chloride in solution or magnesium sulfate in solution, or a combination thereof.

As mentioned, the liquid salt, or saturated solution or "brine" is mixed with agglomerating elements, preferably minerals, of the magnesium salt types, for obtaining solid salt crystals having a very thin and relatively consistent surface of a few millimeters.

A mixture of this type can be that given by:
■ Oligosal 95.0-99.0%
■ Magnesium chloride in solution 0.1-2.5% v/v
■ Magnesium sulfate in solution 0.1-2.5% w/v

The mixture is transferred to suitable recipients a few centimeters deep and especially designed in a material conveniently made of non-porous ceramic or the like and provided with a collection system in the form of a high quality stainless steel grid to prevent the oxidation.

By means of the regulated application of heat the mixture is subjected to a controlled evaporation at a temperature comprised between 70 - 90°C.

The thin layer formed on the surface is periodically removed by the grid to prevent to the greatest possible extent the deposition of the formed crystals as well as to prevent that their agglomeration is such that it causes precipitation by forming heavier and larger bodies.

Thin, flat and at the same time rigid crystals with a high consistency are thus obtained which provide a crunchy effect when applied as a result of the composition used in their preparation, making it very characteristic.

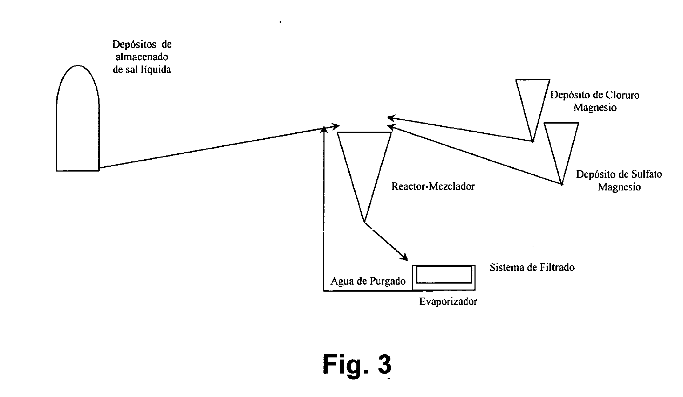

A scheme of the system and the process for obtaining said solid salt proposed by the fourth aspect of the present invention are depicted in Figure 3, where three tanks can be observed, one for the liquid salt, another one for the magnesium chloride and another one for the magnesium sulfate, from where respective arrows to a reactor-mixer are drawn, said arrows indicating the addition of the components stored in said tanks to the reactor-mixer where the mixture occurs, which mixture passes to the evaporator therein depicted (the purge water of which is led to the reactor-mixer again to be reused).

Said evaporator is associated to a filtering system, such as the mentioned grid.

The crystals removed from the surface are suitably packaged in closed vessels to prevent contamination. Their uses are intended for the use as high quality salt, free of any treatment and elements, in their use as salt for human food.

The crystals which are formed at the bottom and which form bodies that are several millimeters thick are gradually removed from the bottom and are used as a granulated food salt or for other common purposes already known.

The salt crystals obtained after a crystallization/evaporation process or any another type of solid salt by means of its combination with the suitable agglutinating agents and by means of the use of a hydraulic and pneumatic compaction system is used for preparing salt stones to be subsequently laminated or ground for their use in several cooking utilities.

Similarly, they can be combined with other types of minerals, colorants and aromatic agents to improve their contents and provide with a series of products which using the salt as an excipient meets the requirements of the prepared food in which they are used. In this process, the salt used as the basis serves for either the crystals which cannot be used for the other uses or for the use other types of salts, with purities no less than 80% of sodium chloride, obtaining a compact and very homogeneous agglomerate of elements and ingredients which must be provided separately by means of traditional systems or those that do not assure an equal and homogeneous distribution.

Combined with other elements, in addition to the previously mentioned elements or not, such as refractory clays, diatomaceous earth, marble powder, volcanic earth, etc. in addition to spices and flavoring elements, the compact stone obtained can be laminated in portions of 2 to 5 cm to be used for cooking, subjecting the lamina to prior heating in an oven for subsequently or therein depositing the element to be cooked on the lamina. The actual heat absorbed and released by the lamina is capable of cooking while at the same time the lamina provides the food with taste and enriches any food with which it is used.

The same stone, conveniently cut in fragments of a few centimeters, in the form of asymmetrical lumps, can be applied, then grating it by means of a suitable element so that it can be distributed on the food to be seasoned, offering a controlled content both regarding the salt and the remaining elements forming the initial mixture, providing nutritive and flavoring effects which are not achieved with the use of common salt.

The compaction system consists of a series of operations:
- Mixing:
   ■ Based on following a given formulation for the purpose of performing the necessary supply of determined ingredients per kg of ingested product, incorporating them by means of an automated and controlled metering/weighing system.
   ■ Each of the ingredients forming the product to be prepared is mixed with the salt, acting as the main excipient, by means of a rotating blade and drum system. A series of mineral agglutinants facilitating the compaction are added along with the former.
- Metering:
   ■ By means of a series of worm screws and a system of cubed recipients for preparing the pieces, the prepared mixture of salt and the rest of ingredients are metered in the casts or molds prepared for manufacturing the pieces according to a determined weight and the forms of which could be rectangular or conical, according to if the end product or the piece is going to be housed in the floor or at a determined height by means of the use of a suitable support which allows that, in the latter, the piece moves when an animal licks it, thus spinning on its shaft.
- Pressing:
   ■ Once the molds have been conveniently filled, a series of pistons are lowered onto them and transmit an extreme pressure to the mixture which is, as a result of this strong pressure, bound and agglutinated, with the suitable shape according to the mold used, conical or rectangular shaped.
- Finishing:
   ■ The compacted pieces are subjected to a lamination process performed with respective blade in the estimated thickness to obtain the desired laminas.

For obtaining the lumps, the stone is ground done by means of the action of applying sufficient mechanical force to obtain such lumps.

A person skilled in the art could introduce changes and modifications in the described embodiments without departing from the scope of the invention as it is defined in the attached claims.

## Claims

1. A method for obtaining a liquid salt, of the type comprising mixing a solid salt with water until obtaining its maximum degree of saturation, obtaining a saturated solution of sodium chloride, and subsequently subjecting to said saturated solution of sodium chloride to a series of processes to improve its characteristics and to eliminate impurities, said method being **characterized in that** said processes are carried out according to at least the following steps:
d) modifying the pH of said saturated solution of sodium chloride, or stock solution, until reaching values considered suitable so that flocculating agents can interact with colloidal particles and impurities in suspension typical of the origin of said solid salt, and
e) treating with said flocculating agents said stock solution the pH of which has been modified in said step d), to eliminate said particles and impurities in suspension.

2. The method according to claim 1, **characterized in that** said steps d) and e) are carried out in the same tank.

3. The method according to claim 2, **characterized in that** it comprises carrying out at least during said step e) stirring of the solution contained in said tank to improve the action of said flocculating agents.

4. The method according to claim 3, **characterized in that** it comprises stopping said stirring of said step e) so that the agglomerates of undesirable particles fall by gravity and are deposited at the bottom of said tank, after which said undesirable particles are eliminated to prevent their accumulation.

5. The method according to claim 4, **characterized in that** it comprises adding pH stabilizing agents in said tank once said undesirable particles are removed until reaching parameters close or equal to neutrality, thus obtaining a saturated solution of sodium chloride forming said liquid salt.

6. The method according to claim 1, **characterized in that:**
said step d) comprises leading the stock solution to first reactors-mixers and carrying out said pH modification in said first reactors-mixers, and
said step e) comprises leading said stock solution the pH of which has been modified in said step d) to a flocculation reactor and carrying out said treatment with said flocculating agents in said flocculation reactor.

7. The method according to claim 6, **characterized in that** it comprises performing, after said step e), the following steps:
f) leading the solution obtained after step e), once treated with said flocculating agents, to adapted reactors-decanters so that the agglomerates of undesirable particles fall by gravity and are deposited at the bottom of said reactors-decanters, after which said undesirable particles are eliminated to prevent their accumulation, and
g) leading the supernatant solution in said reactors-decanters used in said step f) to a neutralizing tank and adding pH stabilizing agents in said neutralizing tank until reaching parameters close or equal to neutrality, thus obtaining a saturated solution of sodium chloride forming said liquid salt.

8. The method according to claim 6, **characterized in that** it comprises carrying out during said step d) and/or during said step e) stirring of the solution contained in said first reactors-mixers and/or in said flocculation reactor.

9. The method according to claim 1, 2, 3 or 6, **characterized in that** said pH modification of said step d) comprises carrying out at least an alkalization process.

10. The method according to claim 9, **characterized in that** for carrying out said alkalization process it comprises adding, in said step d), at least a sodium hydroxide type alkali and/or a calcium hydroxide type alkali to said stock solution.

11. The method according to claim 9 or 10, **characterized in that** said pH modification of said step d) further comprises carrying out a decarbonation process.

12. The method according to claim 1, 2, 6, 9, 10 or 11, **characterized in that** said pH values to be reached for said stock solution by means of said modification of said step d) are comprised between 10 and 11.5 units.

13. The method according to claim 9, 10 or 11, **characterized in that** said pH values to be reached for said stock solution by means of said modification of said step d) are greater than 12 units to reduce, by means of precipitation, at least the amount of magnesium salts.

14. The method according to claim 1, 2 or 6, **characterized in that** said flocculating agents are of at least one of the following types of flocculating agents: natural type and artificial type additive, or a combination thereof.

15. The method according to claim 14, **characterized in that** said flocculating agent of the natural type additive is of the clay type and said flocculating agent of the artificial type is of the synthetic polymer type.

16. The method according to claim 1 or 6, **characterized in that** it comprises obtaining said saturated solution of sodium chloride by means of performing some initial steps, comprising:
a) supplying water to a mixer-saturator group comprising at least one mixer-saturator (H),
b) automatically and continuously adding in said mixer-saturator group a salt with a purity equal to or greater than 80% in sodium chloride physically previously ground until obtaining a grain size readily dissolved in water, and
c) continuously stirring the content of said mixer-saturator (H) to dissolve said salt ground in said water or to completely dissolve a premixture of the salt and the water, until obtaining a maximum concentration, measured by its density, and until its degree of saturation is between 1.205 and 1.208 g/ml.

17. The method according to claim 2, **characterized in that** it comprises carrying out said mixture of said solid salt with water in said tank where said steps d) and e) are carried out.

18. The method according to claim 16, **characterized in that** said step a) comprises supplying water under pressure to a premixture reactor (C) comprised in said mixer-saturator group, and said step b) comprises adding said salt in said premixture reactor (C), a premixture of the salt and the water being produced in said premixture reactor (C), which premixture is sent to said mixer-saturator (H) connected to the outlet of said premixture reactor (C), where said step c) is carried out by means of the mechanical stirring of said premixture.

19. The method according to claim 18, **characterized in that** it comprises sending to said mixer-saturator (H) salt from a pit (F) collecting the excess salt discharged at the lower part by both, the premixture reactor (C) and the mixer-saturator (H) by means of a return or recovery circuit (G) which communicates said pit (F) with an inlet of said mixer-saturator (H), where said recovered excess salt is stirred according to said step c).

20. The method according to claim 7, **characterized in that** it comprises, after said step g), performing the following step:
h) leading said saturated solution obtained to storage tanks adapted for preserving it from external contaminating agents, conserving its physical-chemical stability and maintaining the obtained degree of saturation substantially stable.

21. The method according to claim 20, **characterized in that** it comprises directly packaging said solution stored in said step h) in containers adapted for maintaining the obtained degree of saturation substantially stable.

22. The method according to claim 20 or 21, **characterized in that** said adaptation of said storage tanks and/or of said containers comprises at least conferring configurations to the same which provide good tightness characteristics.

23. The method according to claim 20, **characterized in that** it comprises performing, after said step h), the following step:
i) leading said solution stored in said step h) to second reactors-mixers for subsequent treatment.

24. The method according to claim 23, **characterized in that** said subsequent treatment of said step i) consists of a mixing, by means of forced stirring, the saturated solution of sodium chloride with one or more additives, individually or mixed with one another.

25. The method according to any of the preceding claims, **characterized in that** said mixed water and solid salt and said flocculating agents used in said step e) are suitable for human consumption.

26. The method according to claim 25 when it depends on claim 24, **characterized in that** said additive or additives to be used in said step i) are at least one of the group formed by the following elements, all of them suitable for human consumption:
- food concentrates of meat, fish, vegetables, fruit, herb extracts, chili peppers or a combination thereof.

27. The method according to claim 26 or 25 when it depends on claim 24, **characterized in that** said additive or additives to be used in said step i) are at least one of the group formed by the following elements, all of them suitable for human consumption:
- flavorings and flavor enhancers,
- colorants,
- aromatic agents, sweeteners and sweetening agents
- stabilizers, emulsifiers, pH regulating elements,
- preservative agents and other biocidal elements and microbial contamination controllers,
- other spices, seasonings and additives, and
- minerals .

28. The method according to claim 26 or 27, **characterized in that** it comprises performing said mixing of said step i) using the following proportions: 93 to 99% of saturated solution of sodium chloride, 0.1 to 5% of food concentrate, herb extracts and/or chili peppers, and, where appropriate, 0.01 to 2% of aromatic agents.

29. The method according to any of claims 24 to 28, **characterized in that** it comprises packaging said solution obtained after said step i).

30. The method according to claim 29, **characterized in that** said packaging is carried out using metering containers in the form of sprayers.

31. The method according to claim 16, **characterized in that** said supplying of water of said step a) is carried out by means of pumping and piping system.

32. The method according to claim 25, **characterized in that** said water suitable for human consumption, or drinking water, is previously treated by any demineralization, decalcification and/or reverse osmosis process.

33. The method according to claim 16, **characterized in that** said salt added in said step b) is a natural mineral rock salt which has been extracted from the depths of salt mines, or a sea salt obtained by direct evaporation, and **in that** said milling has been performed by means of a mill adapted for obtaining said grain size readily dissolved in water, with a granulometry between 0.5 and 5 mm.

34. The method according to claim 18, **characterized in that** said continuous addition of salt of said step b) is carried out by means of an automated addition system, consisting of a hopper (A) where the previously ground salt is deposited and a conveyor belt or feeding belt (B) which leads the salt to said premixture reactor (C).

35. The method according to claim 16 or 18, **characterized in that** said step d) is carried out by means of an automatic pumping system for leading the saturated solution of sodium chloride from a stock solution tank (J), connected to the outlet of the mixer-saturator (H), to said first reactors-mixers.

36. The method according to claim 7, **characterized in that** said leading of said supernatant solution of said step g) is carried out by gravity to said neutralizing tank, after an overflow of the supernatant solution in said reactors-decanters by spouts located therein.

37. The method according to claim 20, **characterized in that** said leading said step h) is carried out by means of pumping system and a closed piping circuit, to prevent its possible contamination, to said storage tanks.

38. The method according to claim 29, **characterized in that** it comprises, prior to said packaging, leading said solution from said second reactors-mixers, after said step i), by pumping to a closed piping system.

39. The method according to claim 23, **characterized in that** said leading of said step i) is carried out by means of a pumping system.

40. A liquid salt obtained by means of applying the proposed method according to any one of the preceding claims.

41. The liquid salt according to claim 40, **characterized in that** it is formed by a sodium chloride concentration between 305 to 330 g/l, in relation to dry weight, has a neutral or slightly acid pH with values comprised between 5.50 and 7.50 units, and the following physical-chemical characteristics:
- turbidity of 0 to 5 NTU,
- hardness less than 400° TH,
- contents of at least one trace element of the group comprising the following trace elements, or a combination thereof: calcium, magnesium and sulfates, and
- at least one trace element of the group comprising the following trace elements, or a combination thereof: zinc and iron.

42. The liquid salt according to claim 40 or 41, **characterized in that** is adapted for being packaged in a metering container in the form of a sprayer to be applied regularly and homogeneously on the food to be flavored.

43. The liquid salt according to claim 42, **characterized in that** its composition and/or said homogeneous distribution by means of said metering container allows substituting the effects, at least regarding flavor, which a higher amount of sodium provides in a solid salt.

44. The liquid salt according to claim 40, **characterized in that** it is a hard salt or ionic salt formed by a sodium chloride concentration between 305 to 330 g/l, in relation to dry weight, has a neutral or slightly acid pH with values comprised between 5.50 and 8.50 units, and the following physical-chemical characteristics:
- turbidity of 0 to 25 NTU,
- hardness less than 400° TH.

45. The liquid salt according to claim 44, **characterized in that** it is an ultra-pure ionic salt derived from adding a decontaminating agent or biocide to said ionic salt, said ultra-pure ionic salt being formed by a sodium chloride concentration between 305 to 330 g/l, in relation to dry weight, having a neutral or slightly acid pH with values comprised between 5.50 and 7.50 units, and the following physical-chemical characteristics:
- turbidity of 0 to 10 NTU,
- hardness less than 400° TH,
- microbial content less than 100 cfu.

46. The liquid salt according to claim 40, **characterized in that** it is a soft salt or hydrolyzed salt formed by a sodium chloride concentration between 305 to 330 g/l, in relation to dry weight, has a neutral or slightly acid pH with values comprised between 5.50 and 7.50 units, and the following physical-chemical characteristics:
- turbidity of 0 to 10 NTU,
- hardness less than 10° TH.

47. The liquid salt according to claim 46, **characterized in that** it is a pure hydrolyzed salt derived from adding to said hydrolyzed salt at least one sequestering ingredient or ionic and/or cationic complexing agent, hardness effect masking agent, said pure hydrolyzing salt being formed by a sodium chloride concentration between 305 to 330 g/l, in relation to dry weight, having a neutral or slightly acid pH with values comprised between 5.50 and 7.50 units, and the following physical-chemical characteristics:
- turbidity of 0 to 10 NTU,
- hardness of substantially 0° TH.

48. The liquid salt according to claim 47, **characterized in that** said sequestering ingredient or complexing agent is a complexing agent ingredient of at least calcium and magnesium cations.

49. The liquid salt according to claim 47 or 48, **characterized in that** it is an ultra-pure hydrolyzed salt derived from adding a decontaminating agent or biocide, in addition to said complexing agent ingredient, to said hydrolyzed salt, said ultra-pure hydrolyzed salt being formed by a sodium chloride concentration between 305 to 330 g/l, in relation to dry weight, has a neutral or slightly acid pH with values comprised between 5.50 and 7.50 units, and the following physical-chemical characteristics:
- turbidity of 0 to 10 NTU,
- hardness less than 0° TH,
- microbial content less than 100 cfu.

50. The liquid salt according to any one of claims 41, 42, 45, 46, 47, 48 or 49, **characterized in that** it has a density between 1:198 and 1.205 g/ml.

51. The liquid salt according to any one of claims 41, 44, 45, 46, 47, 48 or 49, **characterized in that** it has a density between 1.160 and 1.205 g/ml.

52. A solid salt obtained from applying an evaporation and crystallization process to a mixture of a liquid salt and agglomerating elements.

53. The solid salt according to claim 52, **characterized in that** it is obtained from applying said evaporation and crystallization process to a mixture of said agglomerating elements and of a liquid salt according to any one of claims 40 to 51.

54. The solid salt according to claim 52 or 53, **characterized in that** said agglomerating elements are of the magnesium salt type, at least one of the group formed by: magnesium chloride in solution and magnesium sulfate in solution, or a combination thereof.

55. A system for obtaining a liquid salt, **characterized in that** it comprises:
- a milling section formed by at least one mill adapted for milling a salt until obtaining a grain size readily dissolved in water,
- a saturation section connected to the outlet of said milling section, and adapted for mixing and dissolving said ground salt with water, obtaining a saturated solution of sodium chloride, or stock solution,
- a conditioning and purification section connected to the outlet of said saturation section to eliminate the possible colloidal particles and impurities in suspension, typical of the origin of the salt, from said stock solution, and
- a neutralization section connected to the outlet of said conditioning and purification section to stabilize the pH of the solution that comes from the same until reaching parameters close or equal to neutrality, thus obtaining a saturated solution of sodium chloride forming said liquid salt.

56. The system according to claim 55, **characterized in that** it further comprises:
- a storage section connected to the outlet of said neutralization section to store the saturated solution obtained in storage tanks adapted for preserving it from external contaminating agents, conserving its physical-chemical stability and maintaining the obtained degree of saturation substantially stable.

57. The system according to claim 55 or 56, **characterized in that** said saturation section comprises:
- an automatic salt addition system formed by at least:
- a hopper (A) where the salt previously ground in said milling section is deposited, and
- a conveyor belt or feeding belt (B) connected to the outlet of said hopper (A) to lead the salt to a premixture area,
and
- a mixer-saturator group formed by:
- a premixture reactor (C), located in said premixture area, with a first upper mouth or inlet (Cᵢ₁) associated to an outlet end of said conveyor belt (B) to receive the salt led by the same, and a second inlet (Cᵢ₂) adapted for receiving water under pressure for the purpose of producing a premixture of the salt and the water, and
- a mixer-saturator (H) with at least one first inlet (Hᵢ₁) connected to a transfer outlet (Co₁) of said premixture reactor (C) to receive said premixture, said mixer-saturator (H) comprising a stirrer (At) for mechanically stirring said premixture for the purpose of completely dissolving and homogenizing the premixture and obtaining said saturated solution of sodium chloride, or stock solution, to be transferred to said conditioning and purification section.

58. The system according to claim 57, **characterized in that** said saturation section comprises a storage tank (J) with an upper mouth or inlet communicated with an distribution outlet (Eₒ₁) of said mixer-saturator (H) to receive said stock solution and store it at least temporarily; said storage tank (J) comprising an outlet and an automatic pumping system to transfer the stock solution to said conditioning and purification section.

59. The system according to claim 57, **characterized in that** said saturation section comprises a pit (F) located below said premixture reactor (C) and said mixer-saturator (H), comprising respective discharge outlets (Cₒ₂, Hₒ₂) to discharge the non-dissolved excess salt to said pit (F), the mixer-saturator (H) further comprising a second inlet (Hᵢ₂) communicated with said pit (F) through a recovery or return circuit (G) to introduce said excess salt in the mixer-saturator for the purpose of dissolving it by means of the mentioned stirring.

60. The system according to claim 57, **characterized in that** said mixer-saturator (H) comprises or is associated to detection means adapted for measuring the density of the solution contained inside it, for the purpose of detecting a maximum concentration of the same until its degree of saturation is between 1.205 and 1.208 g/ml.

61. The method according to any one of claims 6, 7 or 16, **characterized in that** it comprises carrying out at least part of the steps continuously.

62. The method according to claim 61, **characterized in that** it comprises carrying out all the steps continuously.
